Europäisches Patentamt

European Patent Office

Office européen des brevets

(11) Veröffentlichungsnummer: **0 519 260 A2**

# EUROPÄISCHE PATENTANMELDUNG

(21) Anmeldenummer: **92109266.4**

(22) Anmeldetag: **02.06.92**

(51) Int. Cl.5: **G02B 26/08**

(30) Priorität: **15.06.91 DE 4119754**

(43) Veröffentlichungstag der Anmeldung:
**23.12.92 Patentblatt 92/52**

(84) Benannte Vertragsstaaten:
**DE FR GB**

(71) Anmelder: **Agfa-Gevaert AG**

**W-5090 Leverkusen 1(DE)**

(72) Erfinder: **Klocke, Helmut, Dr.**
**Hochfeld 12**
**W-8134 Poecking(DE)**
Erfinder: **Liermann, Traugott, Dipl.-Ing.**
**Bussardtstrasse 40**
**W-8025 Unterhaching(DE)**

(54) **Automatische Lagerkorrektur bei exzentrischer Drehprismenachse.**

(57) Eine Vorrichtung zum Erzeugen einer um einen vorgegebenen Winkel gedrehten Abbildung einer Vorlage auf einer Projektionsfläche mit einem Objektiv und einem drehbar angeordneten Drehprisma, wobei die Bildmitte der Vorlage und/oder der Projektionsfläche nicht auf der optischen Achse des Objektivs liegt, ist so ausgebildet, daß eine Positioniereinrichtung vorgesehen ist, welche die Vorlage in Abhängigkeit von der Drehung des Drehprismas in X-Richtung und/oder Y-Richtung verschiebt.

Fig. 1

Die Erfindung betrifft eine Vorrichtung nach dem Oberbegriff des Anspruchs 1.

Solche Vorrichtungen finden u.a. Verwendung in Mikrofilm-Rückvergrößerungsgeräten. Je nach dem, wie die mikroverfilmten Dokumente bei ihrer Verfilmung positioniert waren, kann es vorkommen, daß bei der Rückvergrößerung die Dokumente quer oder senkrecht auf dem Projektionsschirm dargestellt werden. Ein Betrachter wird vorzugsweise die Dokumente mit stehender Schrift positionieren wollen. Bei Rückvergrößerungsgeräten, welche mit einem Scanner die Projektionsfläche abtasten, ist oftmals, bedingt durch die Breite des Scanners, nur ein Abtasten senkrecht stehender Abbildungen möglich. Bei quer liegenden Vorlagen muß die Abbildung vor dem Abtasten durch das Drehprisma in die senkrechte Stellung gebracht werden. Leicht schräg stehende Vorlagen lassen sich durch eine leichte Drehung vorteilhaft in die korrekte Lage bringen.

Um die zum Rückvergrößern vorgesehenen Dokumente unabhängig von ihrer Ausrichtung auf der Vorlage in der vom Betrachter gewünschten oder zum Abscannen erforderlichen Lage auf der Projektionsfläche darzustellen, werden sogen. Drehprismen verwendet. Bei einer Vorrichtung der eingangs genannten Art bewirkt die Abweichung der optischen Achse von der Mitte der Vorlagen und/oder Projektionsfläche, daß sich die Abbildung eines Dokumentes beim Drehen mittels eines Drehprismas nicht um einen festen Bezugspunkt - vorzugsweise die Mitte der Projektionsfläche - dreht, sondern eine exzentrische Bewegung ausführt. Dadurch kann es vorkommen, daß Teile des Dokumentes nach dem Drehen außerhalb der Projektionsfläche bzw. des Scannbereichs liegen. Zudem ergibt sich bei manchen Drehprismen konstruktionsbedingt noch eine Abweichung der optischen Achse von der Drehachse.

Es ist Aufgabe der Erfindung, eine Vorrichtung zu schaffen, bei welcher die Abbildung einer Vorlage zentrisch um einen festen Bezugspunkt auf der Projektionsfläche gedreht wird, obwohl die Bildmitte der Vorlage und/oder der Projektionsfläche nicht auf der optischen Achse des Objektivs liegt und zudem eine Abweichung zwischen der optischen Achse und der Drehachse des verwendeten Drehprismas besteht.

Diese Aufgabe wird gelöst durch die im Kennzeichen des Anspruchs 1 beschriebene Erfindung.

Die Erfindung macht sich dabei die Erkenntnis zunutze, daß durch Verschieben der Vorlage und/oder des Objektivs auch die Abbildung der Vorlage auf der Projektionsfläche verschoben wird. Bei bekanntem Abstand, der optischen Achse von der Bildmitte der Projektionsfläche lassen sich unter Berücksichtigung des Vergrößerungsfaktors des Objektivs für jede Winkelstellung des Drehprismas entsprechende Korrekturwerte bestimmen, um welche die Vorlage in X- und/oder Y-Richtung verschoben werden muß.

In einer bevorzugten Ausführungsform der Erfindung werden sowohl für den Antrieb des Drehprismas und für das Verschieben der Vorlage in X- und/oder Y-Richtung Schrittmotoren verwendet, welche von einem gemeinsamen Steuergerät, z.B. einem Mikroprozessor, ansteuerbar sind.

Die Verwendung des Mikroprozessors erlaubt es vorteilhaft, in einem Speicher für jeden Drehwinkel des Drehprismas die zugehörigen Korrekturwerte für die Verschiebung der Vorlage und/oder des Objektivs in X- bzw. Y-Richtung zu speichern.

In einer vorteilhaften Weiterbildung der Erfindung tastet ein Scanner die Projektionsfläche ab und erkennt dabei die Lage der Abbildung auf der Projektionsfläche. Auf diese Weise kann nicht nur ein Drehen einer quer vorliegenden Abbildung in eine senkrechte Lage automatisch erfolgen; auch leicht schräg stehende Abbildungen können korrigiert werden.

Nachfolgend wird ein mögliches Ausführungsbeispiel der Erfindung anhand einer Figur näher erläutert:

Aus Gründen der besseren übersichtlichkeit wurde auf die Darstellung der sonstigen, für eine Projektion notwendigen Einrichtungen, wie z.B. Lichtquelle und Kondensorlinsen, verzichtet. Mit 1 ist eine Vorlage, z.B. ein Mikrofilmbild, bezeichnet. Dieses wird durch ein Objektiv 2 auf einer Projektionsfläche 3 vergrößert abgebildet. Die Abbildung ist mit 4 beziffert. Im Strahlengang des Objektives 2 befindet sich ein Drehprisma 5, welches durch einen Antrieb 6 beliebig gedreht werden kann. Der Mittelpunkt 1a der Vorlage 1 befindet sich nicht auf der optischen Achse 7 des Objektivs 2. Die Lage des Objektivs 2 und des Drehprismas 5 bezüglich der Projektionsfläche 3 ist aus anderen, hier nicht diskutierten Gründen so gewählt, daß der Mittelpunkt 3a der Projektionsfläche 3 nicht auf der optischen Achse 7 liegt. Bei dem verwendeten Drehprisma 5 handelt es sich um ein Doveprisma, welches vorteilhaft geringe Abmessungen aufweist, aber konstruktionsbedingt einen Versatz der optischen Achse 7 - in der Zeichnung durch die beiden Teile 7a, 7b der optischen Achse 7 kenntlich gemacht - erzeugt.

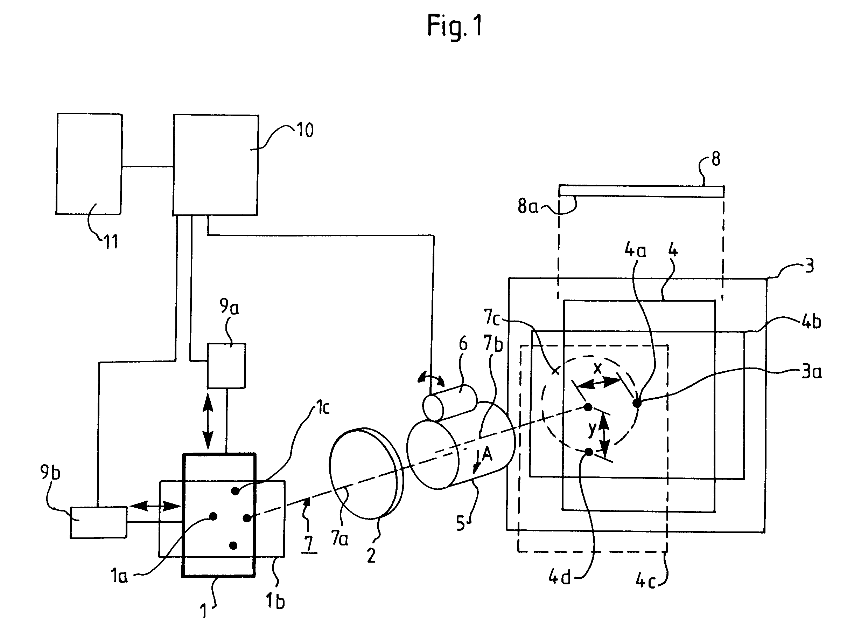

Im gezeigten Beispiel bewirkt die Abweichung der optischen Achse 7 vom Mittelpunkt 1a der Vorlage 1 und die dazu komplementäre Abweichung der optischen Achse 7 vom Mittelpunkt 3a der Projektionsfläche 3, daß die Abbildung 4 mittig zentriert auf der Projektionsfläche 3 erscheint.

Befindet sich eine Vorlage im Querformat, wie in der Zeichnung mit 1b beziffert, ergibt dies eine querliegende Abbildung 4b auf der Projektionsfläche 3. Um die querliegende Abbildung 4b senkrecht auf der Projektionsfläche 3 abzubilden, etwa, damit die auf der Vorlage enthaltenen Schriftzeichen aufrechtstehen oder das Abtasten mit einem Scanner 8, dessen Scanbereich 8a nur unwesentlich breiter als die Schmalseite der Abbildung 4 ist, zu ermöglichen, wird das Drehprisma 5 in Pfeilrichtung A gedreht.

Der Scanner 8 kann dazu verwendet werden, die Projektionsfläche 3 abzutasten und die Lage der Abbildung automatisch zu ermitteln. Auch leicht schräg stehende Abbildungen, die auf eine nicht korrigierte Mikroverfilmung zurückzuführen sind, können so erkannt und korrigiert werden.

Aufgrund der Abweichung von optischer Achse 7 zum Bildmittelpunkt 4a wird der Bildmittelpunkt 4a der Abbildung 4b auf der Projektionsfläche 3 exzentrisch auf einer Kreisbahn 7c um die optische Achse 7 bewegt. Die senkrecht stehende, neue Abbildung 4c liegt z.T. außerhalb der Projektionsfläche 3.

Der neue Bildmittelpunkt 4d hat vom Mittelpunkt 3a der Projektionsfläche 3 eine in X- und Y-Richtung abweichende neue Lage. Um diese Abweichung zu kompensieren, wird durch Schrittmotoren 9a und 9b die Vorlage 1b in X- und in Y-Richtung bewegt. Der Schrittmotor 9a bewegt die Vorlage 1b in Y-Richtung, der Schrittmotor 9b bewegt die Vorlage 1b in X-Richtung. Die Schrittmotoren 9a, 9b bewegen nun die Vorlage 1b solange, bis sich der Mittelpunkt 1a der Vorlage 1b in der mit 1c gekennzeichneten Position befindet. Durch das Verschieben der Vorlage 1b wurde erreicht, daß sich der Mittelpunkt 4d der Abbildung 4c wieder im Mittelpunkt 3a der Projektionsfläche 3 befindet. Ein Abscannen mittels Scanner 8 ist dann möglich.

Ebenso ist es möglich, das Objektiv 2 zu bewegen, um den Mittelpunkt 1a der Vorlage 1b im Mittelpunkt 3a der Projektionsfläche 3 abzubilden.

Vorteilhaft ist auch eine Ausführungsform, in der die Vorlage 1b in Y-Richtung und das Objektiv 2 in X-Richtung bewegt wird.

Für jeden Winkel, um den das Drehprisma 5 gedreht wird, existieren Korrekturwerte, um welche die Vorlage in X- und Y-Richtung bewegt werden muß, damit sich der Mittelpunkt der Bildvorlage im Mittelpunkt der Projektionsfläche befindet. Diese zu den jeweiligen Drehwinkeln passenden Korrekturwerte können nun in einer Zuordnungstabelle abgelegt werden, was speziell bei Anwendungsfällen, in denen das Ansteuern des Antriebs 6 und der Schrittmotoren 9a, 9b durch ein Steuergerät erfolgt,von Vorteil ist.

Ein mit 10 beziffertes Steuergerät kontrolliert den Antrieb 6 und die Schrittmotoren 9a, 9b. In einem Speicher 11 sind die zum jeweiligen Drehwinkel korrespondierenden Korrekturwerte, um welche die Vorlage 1b in X- bzw. Y-Richtung bewegt werden muß, in Form einer Zuordnungstabelle abgelegt.

## Patentansprüche

1. Vorrichtung zum Erzeugen einer um einen vorgegebenen Winkel gedrehten Abbildung einer Vorlage auf einer Projektionsfläche mit einem Objektiv und einem drehbar angeordneten Drehprisma, wobei die Bildmitte der Vorlage und/oder der Projektionsfläche nicht auf der optischen Achse des Objektivs liegt, dadurch gekennzeichnet, daß eine Positioniereinrichtung (9a, 9b) vorgesehen ist, welche die Vorlage (1) und/oder das Objektiv (2) in Abhängigkeit von der Drehung des Drehprismas (5) in X-Richtung und/oder Y-Richtung verschiebt.

2. Vorrichtung nach Anspruch 1, dadurch gekennzeichnet, daß als Antrieb (6) für das Drehprisma (5) und die Positioniervorrichtung jeweils Schrittmotoren (9a, 9b) vorgesehen sind, welche von einem Steuergerät (10) ansteuerbar sind.

3. Vorrichtung nach Anspruch 1, dadurch gekennzeichnet, daß in einem Speicher (11) für den jeweiligen Drehwinkel des Drehprismas (5) die zugehörigen Werte für die Verschiebung der Vorlage und/oder des Objektivs (2) in X-Richtung und/oder Y-Richtung gespeichert sind.

4. Vorrichtung nach Anspruch 1, dadurch gekennzeichnet, daß ein Scanner (8) vorgesehen ist, der die Projektionsfläche (3) abtastet, die Lage der Abbildung ermittelt und daraus die notwendige Drehung des Drehprismas (5) und die zugehörigen Werte für die Verschiebung errechnet.

# Fig. 1

EP 0 519 260 A2